# EUROPÄISCHE PATENTSCHRIFT

(11) **EP 3 404 403 B1**
(45) Veröffentlichungstag und Bekanntmachung des Hinweises auf die Patenterteilung: **27.03.2019**
(21) Anmeldenummer: 17171668.1
(22) Anmeldetag: 18.05.2017
(51) Int. Cl.: G01N 21/84, G01N 21/88

(54) **VERFAHREN UND VORRICHTUNG ZUR PRÜFUNG DER QUALITÄT VON BESCHICHTETEN OBERFLÄCHEN**
METHOD AND DEVICE FOR TESTING THE QUALITY OF COATED SURFACES
PROCÉDÉ ET DISPOSITIF DE VÉRIFICATION DE LA QUALITÉ DE SURFACES REVÊTUES

(43) Veröffentlichungstag der Anmeldung: 21.11.2018
(73) Patentinhaber: Grob-Werke GmbH & Co. KG, 87719 Mindelheim (DE)
(72) Erfinder: DROPMANN, Maximilian, 87600 Kaufbeuren (DE)
(74) Vertreter: Kramer Barske Schmidtchen Patentanwälte PartG mbB

(56) Entgegenhaltungen:
- JP-B2- 5 257 756
- LEKATOU A ET AL: "A comparative study on the microstructure and surface property evaluation of coatings produced from nanostructured and conventional WC-Co powders HVOF-sprayed on Al", SURFACE AND COATINGS TECHNOLOGY, ELSEVIER BV, AMSTERDAM, NL, Bd. 276, 14. Juni 2015 (2015-06-14), Seiten 539-556, XP029257650, ISSN: 0257-8972, DOI: 10.1016/J.SURFCOAT.2015.06.017
- KIM JAEICK ET AL: "Deposition of Workability-Enhancing Disposable Thick Fe Deposits on Fe-Si Alloy Sheets Using Thermal and Kinetic Spray Processes", JOURNAL OF THERMAL SPRAY TECHNOLOGY, ASM INTERNATIONAL, MATERIALS PARK, US, Bd. 24, Nr. 3, 8. November 2014 (2014-11-08), Seiten 318-327, XP035433921, ISSN: 1059-9630, DOI: 10.1007/S11666-014-0168-0 [gefunden am 2014-11-08]
- POIRIER DOMINIQUE ET AL: "Thermal Cycling Assessment of Steel-Based Thermal Barrier Coatings for Al Protection", JOURNAL OF THERMAL SPRAY TECHNOLOGY, ASM INTERNATIONAL, MATERIALS PARK, US, Bd. 24, Nr. 1, 20. November 2014 (2014-11-20), Seiten 175-184, XP035420883, ISSN: 1059-9630, DOI: 10.1007/S11666-014-0190-2 [gefunden am 2014-11-20]
- REZVANI RAD M ET AL: "Stress analysis of thermal barrier coating system subjected to out-of-phase thermo-mechanical loadings considering roughness and porosity effect", SURFACE AND COATINGS TECHNOLOGY, Bd. 262, 16. Dezember 2014 (2014-12-16), Seiten 77-86, XP029188123, ISSN: 0257-8972, DOI: 10.1016/J.SURFCOAT.2014.12.016
- BOBZIN K ET AL: "Thermal spraying of cylinder bores with the Plasma Transferred Wire Arc process", SURFACE AND COATINGS TECHNOLOGY, ELSEVIER BV, AMSTERDAM, NL, Bd. 202, Nr. 18, 15. Juni 2008 (2008-06-15), Seiten 4438-4443, XP022695027, ISSN: 0257-8972, DOI: 10.1016/J.SURFCOAT.2008.04.023 [gefunden am 2008-04-08]
- K. BOBZIN ET AL: "Coating Bores of Light Metal Engine Blocks with a Nanocomposite Material using the Plasma Transferred Wire Arc Thermal Spray Process", JOURNAL OF THERMAL SPRAY TECHNOLOGY., Bd. 17, Nr. 3, 3. Juli 2008 (2008-07-03), Seiten 344-351, XP055258217, US ISSN: 1059-9630, DOI: 10.1007/s11666-008-9188-y

## Beschreibung

Die vorliegende Offenbarung betrifft ein Verfahren und eine Vorrichtung zur Prüfung der Qualität von beschichteten Oberflächen. Ein solches Verfahren bzw. eine solche Vorrichtung kommt zur Poren- und Oxidmessung von beschichteten Oberflächen, wie beispielsweise Zylinderlaufbahnen, zur Anwendung.
Üblicherweise werden beispielsweise Zylinderkurbelgehäuse (Motorblöcke) als Gussbauteil hergestellt. Die in einem entsprechenden Gießprozess unmittelbar hergestellte Innenoberflächen von Zylindern erfüllen meist geometrisch und/oder im Hinblick auf die Oberflächeneigenschaften nicht die an eine Zylinderlauffläche, auf bzw. in der später ein Kolben gleitet, gestellten Anforderungen. Aus diesem Grund werden entweder Zylinderlaufbuchsen, deren Innenoberflächen bereits den Anforderungen entsprechen oder nach dem Einsetzen entsprechend bearbeitet werden, in die Zylinder eingesetzt, oder es werden Beschichtungen auf die Innenoberflächen der Zylinder aufgebracht. Solche Beschichtungen werden beispielsweise mittels einer thermisch gespritzten Beschichtung realisiert. Bekannte Verfahren zum thermischen Beschichten sind beispielsweise das Plasma-Transferred-Wire-Arc-Verfahren (PTWA-Verfahren), das Lichtbogen-Drahtspritzen-Verfahren (LDS-Verfahren) oder die Grob-Thermal-Spray-Verfahren (GTS-Verfahren; umfasst RSW-Verfahren (Rotating Single Wire) und APS2-Verfahren (atmosphärisches Plasmaspritzen)). Im Letzteren bildet ein Ende eines maschinell zugeführten Drahtes eine Anode aus, auf die ein von einer Kathode ausgehender Plasmastrahl trifft, der das Ende des Drahtes beim Auftreffen auf den Draht aufschmilzt. Das aufgeschmolzene Drahtmaterial wird von einem Transportgasgemisch zerstäubt und in Richtung auf die zu beschichtende Zylinderlauffläche beschleunigt. Die so mitgeführten Partikel werden somit unter Verformung derselben auf die Zylinderlauffläche aufgebracht und bilden die Beschichtung, die gegebenenfalls noch durch Honen oder alternative Finish-Bearbeitungsverfahren nachbearbeitet wird.
Vor allem in der Serienfertigung mit, wie auch in der Entwicklung von, solchen thermisch gespritzten Beschichtungen ist die Qualitätskontrolle von hoher Bedeutung. Die Qualität einer gespritzten Beschichtung wird durch eine Reihe von Schichteigenschaften bestimmt, die zur Beurteilung der Qualität analysiert werden müssen. Hierzu werden je nach Anforderungen beispielsweise in drei Raumebenen Schliffproben angefertigt, die im Anschluss unter einem Lichtmikroskop beurteilt werden. In den meisten Fällen ist das Lichtmikroskop mit einer Kamera ausgestattet, die einzelne Ansichten in Bildern festhält. Diese Bilder können mittels entsprechender Bildverarbeitungsprogramme zur Auswertung und Bewertung der Beschichtungseigenschaften analysiert werden.

Zwei der zur Beurteilung der Qualität einer thermisch aufgebrachten Beschichtung, insbesondere einer nach dem GTS-Verfahren aufgebrachten Beschichtung, wichtige Schichteigenschaften sind der Anteil an Poren (Porenanteil) und der Anteil an Oxiden (Oxidanteil) in der Beschichtung.

Poren sind Hohlräume in einem Material und/oder Vertiefungen oder Öffnungen bezüglich der Oberfläche eines Materials. Es wird zwischen Mikro-, Meso- und Makroporen unterschieden. Im vorliegenden Fall soll insbesondere der Porenanteil von Mikroporen bestimmt werden. Die Hohlräume/Poren treten nach dem Abtragen darüber liegender Schichten als Vertiefungen zutage. Der Porenanteil bestimmt daher unter anderem das Ölhaltevolumen einer Oberfläche, das wiederum für deren Reibeigenschaften relevant ist.

Oxide sind im vorliegenden Fall meist Metalloxide, die entstehen, wenn ein Metall mit Sauerstoff reagiert. Die Oxide wiederum bestimmen, ähnlich wie bei Graphit, ebenfalls die Reibeigenschaften der Oberfläche.

Bevorzugt werden Poren- und Oxidanteile innerhalb eines Bereichs mit homogener Schichteigenschaft, d.h., eines Bereichs, in dem die Beschichtung mit nahezu konstanten Prozessparametern und Umgebungsparametern aufgetragen wurde, analysiert. Im Falle eines beschichteten Zylinders ist ein Bereich der Beschichtung, der auf im Wesentlichen demselben Umfangskreis um die Längsachse des Zylinders liegt, im Wesentlichen homogen. Unterschiede in der Beschichtung können sich in Abhängigkeit von der Fertigungstechnik insbesondere an verschiedenen Längspositionen eines Zylinders ergeben.

Da auch innerhalb eines Bereichs mit homogenen Schichteigenschaften die Porenanteile und die Oxidanteile stark schwanken können, muss eine statistische Absicherung bzw. Auswertung erfolgen. Hierfür werden Wertepaare aus Poren- und Oxidanteilen aus einer Vielzahl von zueinander verschiedenen (Bild-) Ausschnitten, die bevorzugt einen Bereich mit homogenen Schichteigenschaften abbilden, bevorzugt aus verschiedenen Einzelbildern, erzeugt und Mittelwerte gebildet.

Die JP 5 257756 B2 beschreibt ein im Stand der Technik bekanntes Verfahren zur Bestimmung des Poren- und Oxidanteils einer mittels eines thermischen Beschichtungsverfahrens aufgebrachten Beschichtung durch Bildanalyse.

Weiter beschreibt LEKATOU A ET AL "A comparative study on the microstructure and surface property evaluation of coatings produced from nanostructures and conventional WC-Co powders HVOF-sprayed on Al", SURFACE AND COATINGS TECHNOLOGY, ELSEVIER BV, AMSTERDAM, NL, Bd. 276, 14. Juni 2015 (1015-06-14), Seiten 539-556, XP029257650, ISSN: 0257-8972, DOI: 10.1016/J.SURFCOAT.2015.06.017 die Verwendung der von der Firma "Leica" angebotenen Mikroskopsoftwareplattform "Leica Application Suite" (=Leica AS) zur Abschätzung der Porosität einer Beschichtung durch Bildanalyse eines einzelnen, vorher mit dem Mikroskop Leica 4000 aufgenommenen Bildes der Beschichtung.

Aufgabe der vorliegenden Erfindung ist es, ein Verfahren und eine Vorrichtung anzugeben, mit dem bzw. der eine Poren- und Oxidmessung zum Erreichen einer Qualitätsaussage für eine Beschichtung schnell und einfach durchgeführt werden kann.

Diese Aufgabe wird gelöst mit einem Verfahren nach Anspruch 1 und einer Vorrichtung nach Anspruch 13. Weiterbildungen sind in den abhängigen Ansprüchen angegeben.

Durch das beanspruchte Aufnehmen einer Bildfolge (= Aufnehmen eines Videos) mit Einzelbildern verschiedener Bereiche einer Oberfläche eines Bauteils, wobei jeder Bereich bevorzugt eine thermisch aufgebrachte Beschichtung mit Poren- und Oxidbereichen einer Oberfläche aufweist, und Verarbeiten jedes aufgenommen Bildes (des Videos) oder von Teilbereichen jedes Bildes in Echtzeit (als Livebild, online) können Wertepaare, die den Poren- und Oxidanteil eines Einzelbildes unmittelbar (in Echtzeit, online) angeben oder aus denen dieselben unmittelbar herleitbar sind, bevorzugt ohne Zwischenspeicherung oder Speicherung der Bildfolge (des Videos), für eine Mehrzahl an (Bild-) Auswertebereichen aus einem oder bevorzugt mehreren Einzelbildern in einer Speichereinheit gespeichert werden. Aus den abgespeicherten Wertepaaren können entsprechende Mittelwerte für einen Poren- und Oxidanteil der Oberfläche des Beschichtungsmaterials berechnet werden, die ebenfalls in Echtzeit (online) aktualisiert werden können.

Das beanspruchte Verfahren erlaubt weiter das unmittelbare (= in Echtzeit, online) Anzeigen der Wertepaare in demjenigen Livebild, aus dem die Werte stammen. Hierdurch kann zum einen eine unmittelbare visuelle Kontrolle der zu speichernden Wertepaare erfolgen. Zum anderen kann nach der Ermittlung der Mittelwerte ein Bild mit einem Poren- und/oder Oxidanteil, der einem der oder beiden Mittelwerten am ehesten entspricht oder diesen nahe kommt, auf einfache Weise aufgefunden und gegebenenfalls mit den gespeicherten Werten und Mittelwerten als Referenzbild verknüpft oder gespeichert werden. Neben der manuellen Auswahl der zu speichernden Wertepaare anhand angezeigter Livebilder und/oder Live-Wertepaare kann die Auswahl der zu speichernden Wertepaare auch automatisch erfolgen. Auslöser für eine automatische Speicherung bzw. Übernahme der aktuellen Werte in die Tabelle kann die Erkennung eines neuen, zum vorherigen Auswertebereich verschiedenen Auswertebereichs sein.

Mit dem beanspruchten Verarbeiten derart, dass Porenbereiche und Oxidbereiche voneinander unterscheidbar markiert werden, kann die Anzahl an Pixeln, die als Porenbereich oder Oxidbereich markiert sind, einfach berechnet werden. Zusätzlich kann auch die Größe einzelner Poren- und Oxidbereiche abgeschätzt werden, indem beispielsweise Pixel mit gleicher Markierung, die benachbart zueinander angeordnet sind, als zusammenhängender Bereich identifiziert werden. Aus der Anzahl der Pixel, die einen solchen zusammenhängenden Bereich bilden, kann die Größe jedes einzelnen Poren- und Oxidbereichs abgeschätzt werden.

Die Messwerte eines Bereichs mit annähernd gleichen Schichteigenschaften, die bevorzugt in einer Tabelle abgelegt werden, werden automatisch über die Anzahl der Messungen statistisch ausgewertet. Die Ergebnisse dieser Auswertung, wie zum Beispiel der Mittelwert und/oder die Standardabweichung und/oder die maximalen und minimalen Messergebnisse können automatisch ausgegeben (gespeichert, übergeben und/oder-angezeigt werden).

Mit dem Verfahren und der Vorrichtung kann sichergestellt werden, dass die Porenanteile und/oder Oxidanteile der Beschichtung innerhalb vorgegebener Grenzwerte liegen. Des Weiteren kann ein Fehlersignal erzeugt werden, falls die Porenanteile und/oder Oxidanteile der Beschichtung außerhalb der vorgegebenen Grenzwerte liegen oder deren Standardabweichung einen vorgegebenen Wert überschreitet, so dass der Mittelwert über der Anzahl der Messungen nicht statistisch abgesichert ist.

Durch die beanspruchte computerbasierte, bevorzugt automatische, Erzeugung der Wertepaare und die entsprechende Berechnung der Mittelwerte und Verknüpfung derselben mit einem Referenzbildbereich oder Referenzbild kann gegenüber herkömmlichen Verfahren insbesondere Zeit eingespart werden. Durch diese Zeiteinsparung kann auch die Reaktionszeit im Fertigungsprozess bei negativer Qualitätsprüfung verringert werden, wodurch der Teileausschuss bzw. die Nacharbeit verringert werden kann. Durch die Verarbeitung und gegebenenfalls Darstellung in Echtzeit können die relevanten Daten unmittelbar erzeugt werden, ohne die bei der Erzeugung der Daten verwendeten Einzelbilder zu speichern. Hierdurch kann Rechen- und Speicherleistung verringert werden. Des Weiteren wird die Fehlerrate in der Qualität verringert, da die berechneten Werte automatisch übernommen und als Grundlage für die Auswertung verwendet werden.

Durch das direkte Einbrennen in, Speichern oder Verlinken der Messergebnisse in bzw. mit Bilddaten eines entsprechenden Referenzbildes oder Bildbereichs kann ein Verlust der Zuordnung vermieden werden.

Unter Verwendung von Parallelisierung und Vektorisierung können kurze Rechenzeiten und eine minimale Verzögerung der Visualisierung gewährleistet werden.

Ausführungsformen und Weiterbildungen der Erfindung werden im Weiteren anhand der folgenden Figuren beschrieben, von denen zeigen:
Fig. 1 einen beispielhaften Ausschnitt eines Zylinderkurbelgehäuses,
Fig. 2 eine beispielhafte Aufsicht auf ein Probeteil,
Fig. 3 eine perspektivische Teilansicht des Probeteils,
Fig. 4 eine beispielhafte Darstellung einer Vorrichtung gemäß einer ersten Ausführungsform,
Fig. 5 eine beispielhafte Darstellung eines Histogramms,
Fig. 6 eine beispielhafte Darstellung eines verarbeiteten Einzelbildes bzw. dessen Anzeige gemäß einer ersten Ausführungsform, und
Fig. 7 ein beispielhaftes Ablaufdiagramm für ein Verfahren gemäß einer ersten Ausführungsform.

Das nachfolgend beschriebene Verfahren und die nachfolgend beschriebene Vorrichtung gemäß einer ersten Ausführungsform dienen zur Qualitätsüberwachung von bevorzugt beschichteten Oberflächen durch Messung von Porenanteilen und Oxidanteilen in einer Oberfläche eines Bauteils.

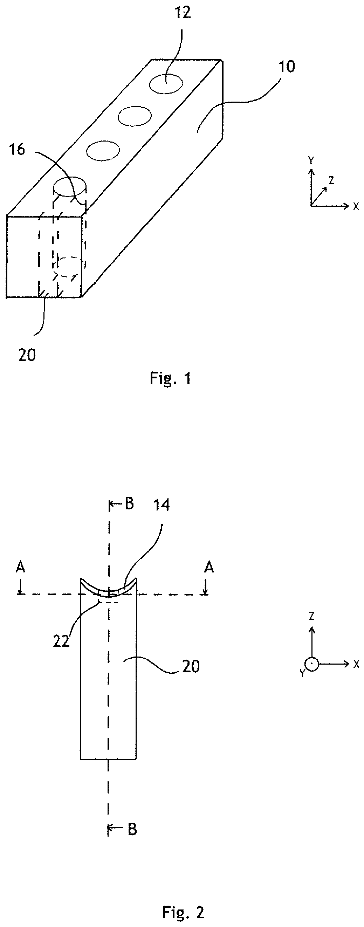

Ein solches Bauteil ist beispielsweise ein Zylinderkurbelgehäuse 10, wie es beispielhaft ausschnittsweise in Fig. 1 dargestellt ist. Ein solches Zylinderkurbelgehäuse 10 weist insbesondere einen oder mehrere Zylinder 12 auf. Wie einleitend beschrieben, wird nach dem Gießen eines solchen Gehäuses eine Zylinderlaufbahn beispielsweise durch Aufbringen einer Beschichtung 14 (siehe Fig. 2) auf die Innenoberfläche 16 der Zylinder 12 ausgebildet. Die Qualität dieser Beschichtung bestimmt sich unter anderem über den Anteil an Poren und den Anteil an Oxiden in der Oberfläche. Zur Qualitätssicherung wird daher der Anteil an Poren und Oxiden gemessen.

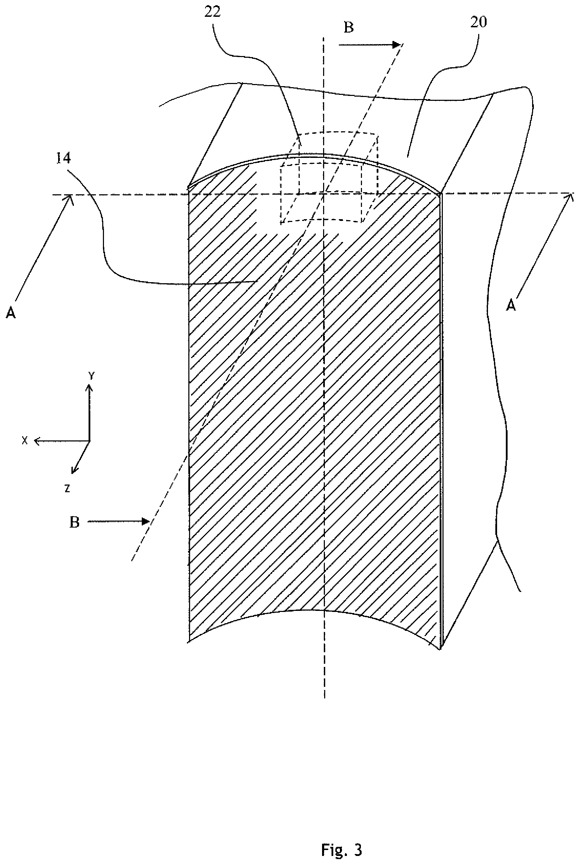

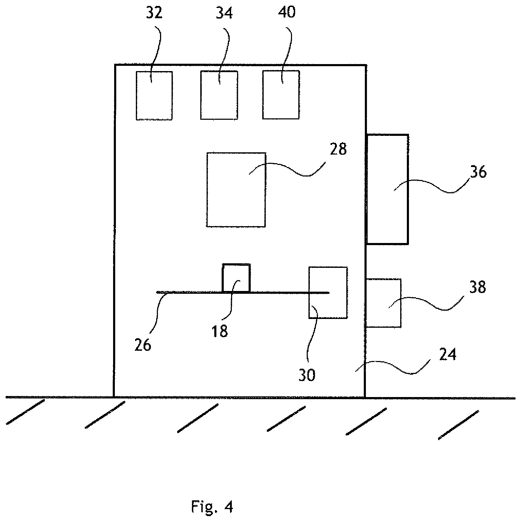

Um eine Poren- und Oxidmessung vorteilhaft durchführen zu können, ist es bevorzugt, zunächst eine Schliffprobe 18 (siehe Fig. 4) der zu messenden Oberfläche (Beschichtung) anzufertigen. Hierzu wird zunächst ein Probeteil 20, wie es in den Fig. 2 und 3 dargestellt ist, aus dem Zylinderkurbelgehäuse 10 ausgeschnitten (siehe gestrichelte Darstellung in Fig. 1). Aus dem Probeteil 20 werden anschließend Schliffproben 18 angefertigt. Die Schliffproben 18 sind bevorzugt aus dem Probeteil 20 ausgeschnittene Würfelteile oder Quaderteile (siehe beispielhaftes Quaderteil 22 in Fig. 2 und 3), deren zu messende Oberfläche, die die Beschichtung enthält, durch Abschleifen und Polieren für die Messung vorbereitet wird. Hierzu wird jedes Würfelteil oder Quaderteil 22 bevorzugt zur besseren Handhabung in einen Kunstharzblock (Einbettmittel; nicht gezeigt) derart eingegossen, dass die zu messende Oberfläche auf einer Oberseite des Kunstharzblockes freiliegt. In der so freiliegenden Oberfläche werden durch das Abschleifen und Polieren mit unterschiedlichen Körnungen beispielsweise Schnittspuren entfernt und wird die zu messende Oberfläche eben in unverfälschter Form ausgebildet. Die zu messende Oberfläche ist beispielsweise entweder ein Querschnitt in der Zeichenebene von Fig. 2 (X-Z-Ebene) oder ein Querschnitt senkrecht hierzu entlang der Linie A-A (X-Y-Ebene) oder der Linie B-B (Y-Z-Ebene), wie in Fig. 2 dargestellt. Beispielsweise hat jedes Würfel- oder Quaderteil 22 eine Kantenlänge im Bereich von 1 cm bis 4 cm.

Fig. 4 zeigt eine beispielhafte Vorrichtung 24 zur Poren- und Oxidmessung gemäß der ersten Ausführungsform. Die Vorrichtung 24 weist in der vorliegenden Ausführungsform einen Messtisch 26 auf, auf dem die Schliffprobe 18 bevorzugt in einer vorbestimmten Position abgelegt werden kann.

Über dem Messtisch 26 ist eine Bildaufnahmevorrichtung 28 vorgesehen, mit der eine Bildfolge mit Einzelbildern, d. h. ein Video, aufgenommen werden kann. Die Optik der Bildaufnahmevorrichtung 28 ist so angeordnet und ausgebildet, dass die zu messende Oberfläche der Schliffprobe 18, die im dargestellten Beispiel der Bildaufnahmevorrichtung zugewandt ist, aufgenommen werden kann. Insbesondere kann die Bildaufnahmevorrichtung 28 auf die zu messende Oberfläche fokussiert werden. Des Weiteren kann der Messtisch 26 relativ zu der Bildaufnahmevorrichtung 28 oder die Bildaufnahmevorrichtung 28 relativ zu dem Messtisch 26 bewegt werden. Beispielsweise kann der Messtisch über ein Getriebe 30 (beispielsweise manuell oder elektronisch betätigbare Spindelgetriebe) horizontal und/oder vertikal verfahren werden.

Die Bildaufnahmevorrichtung 28 ist beispielsweise ein elektronisches Lichtmikroskop mit verschiedenen Vergrößerungsoptiken. Die Bildaufnahmevorrichtung 28 kann manuell oder automatisch auf die zu messende Oberfläche fokussiert werden. Die Bildaufnahmevorrichtung 28 ist weiter so ausgebildet, dass eine Bildfolge mit Einzelbildern, d. h. ein Video, aufgenommen und in Echtzeit an eine Datenverarbeitungseinheit 32 (z.B. mit Recheneinheit, CPU, RAM) übertragen werden kann.

Die Datenverarbeitungseinheit 32 ist dazu ausgebildet, die von der Bildaufnahmevorrichtung 28 erhaltene Bildfolge mit Einzelbildern in Echtzeit zu verarbeiten, wie unten näher beschrieben wird.

Des Weiteren weist die Vorrichtung 24 eine Speichereinheit 34 auf, in der mittels der Datenverarbeitungseinheit 32 gewonnene Daten gespeichert werden können.

Weiter sind in der vorliegenden Ausführungsform eine Anzeigevorrichtung 36, beispielsweise in Form eines Displays, eine Bedienereingabeeinheit 38, und eine Ausgabeeinheit 40 vorgesehen. Mit der Anzeigevorrichtung 36 können in der Datenverarbeitungseinheit 32 gewonnene Daten, mit der Bildaufnahmevorrichtung 28 aufgenommene Bilder und Bildfolgen und in der Speichereinheit 34 gespeicherte Daten visuell ausgegeben werden. Mit der Bedienereingabeeinheit 38 können Befehle zum Verstellen des Messtisches 26, Befehle zum Steuern der Bildaufnahmevorrichtung 28 und der Datenverarbeitungseinheit 32 und Befehle zum Steuern der Anzeigevorrichtung 36 durch einem Bediener eingegeben werden. Die Ausgabeeinheit 40 ist dazu ausgebildet, in der Datenverarbeitungseinheit 32 gewonnene Daten und/oder in der Speichereinheit 34 gespeicherte Daten an weitere Geräte zu übergeben.

Jedes von der Bildaufnahmevorrichtung 28 aufgenommene Einzelbild wird unmittelbar nach seiner Aufnahme an die Datenverarbeitungseinheit 32 übergeben (dies kann sowohl digital als auch analog erfolgen, wobei im Falle einer analogen Übergabe in der Datenverarbeitungseinheit 32 beispielsweise eine Analog-Digital-Wandlung durchgeführt wird).

Zur Erkennung der Porenbereiche und der Oxidbereiche in jedem Einzelbild ist die Datenverarbeitungseinheit 32 weiter dazu angepasst, einen Verarbeitungsbereich des digital vorliegenden Einzelbildes, der das gesamte Einzelbild oder Teile desselben umfassen kann, mittels eines in der Datenverarbeitungseinheit 32 oder der Speichereinheit 34 gespeicherten Programmes einem Schwellenwertverfahren zur Segmentierung jedes Einzelbildes in Poren- und Oxidbereiche zu unterziehen. Mittels eines solchen Verfahrens werden die Pixel des Verarbeitungsbereichs des Einzelbildes abhängig von beispielsweise ihrem Grauwert in verschiedene Schichtstrukturen klassifiziert. Der Grauwert eines Pixels ist sein reiner Helligkeitswert, weitere Farbinformationen werden daher in der hier vorliegenden Verarbeitung nicht berücksichtigt oder gar nicht erst aufgenommen.

In der vorliegenden Anwendung werden schwarze/dunkle Pixel als Pixel, die Poren darstellen, graue Pixel, die heller als die Pixel der Poren sind, als Pixel, die Oxide darstellen und hellgraue Pixel, die heller als die Pixel der Oxide sind, als Pixel, die eine Matrix des Grundmaterials (Fe-Matrix) darstellen, klassifiziert. Da in dem zu messenden Beschichtungsmaterial neben den drei Schichtstrukturen, Poren, Oxide und Fe-Matrix, keine nennenswerten oder relevanten weiteren Klassen vorhanden sind, und da die Pixel einer Klasse (Poren, Oxide oder Fe-Matrix) aufgrund von Störsignalen oder Höhenunterschieden nicht alle den gleichen Grauwert haben, müssen Grauwertbereiche festgelegt werden, anhand derer die jeweiligen Pixel der jeweils zugehörigen Klasse zugeordnet werden.

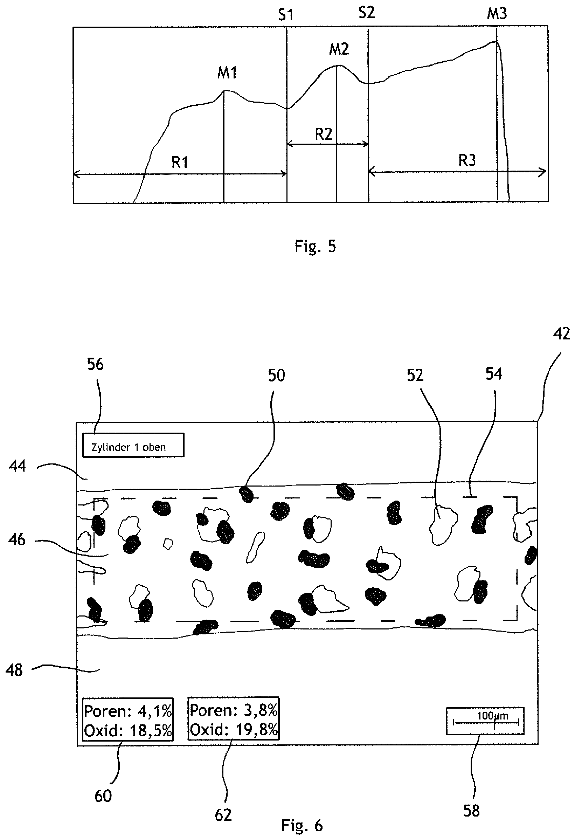

In der vorliegenden Ausführungsform werden zur Segmentierung mittels eines Schwellenwertverfahrens mindestens zwei Schwellenwerte S1 und S2 für Grauwerte von Pixeln festgelegt, mit denen die Pixel jedes Einzelbildes den drei Bereichen (Poren-, Oxid- und Fe-MatrixBereich) zugeordnet werden können. Die Festlegung der Schwellenwerte kann vorgegeben, also in der Speichereinheit 34 abgespeichert sein, von einem Bediener über die Bedienereingabeeinheit 38 eingegeben werden oder durch einen Bediener oder eine Software (Programm) beispielsweise wie folgt bestimmt werden: Fig. 5 zeigt ein beispielhaftes Grauwert-Histogramm eines Einzelbildes einer Beschichtung mit Poren- und Oxidbereichen, wobei der Auswertebereich hier nur die Beschichtung, aber weder Kunstharz-Einbettung noch Aluminiumstruktur umfasst. In dem Histogramm wird auf der vertikalen Achse die Häufigkeit jedes einzelnen Grauwertes durch eine entsprechend hohe Linie angegeben wobei die Grauwerte von links nach rechts heller werden. Ein erster Schwellenwert S1 und ein zweiter Schwellenwert S2 dienen zur Abgrenzung der relevanten Grauwertbereiche. Im dunklen Grauwertbereich (links) zeichnen sich charakteristisch zwei relative Maxima ab. Ein Grauwertbereich R1 für Pixel, die Poren darstellen, wird um das erste relative Maximum M1 eingestellt. Begrenzt wird der Bereich links von dem linken Rand (Grauwert schwarz) des Histogramms und rechts von dem Schwellenwert S1. Der Schwellenwert S1 ist ausgehend von dem ersten relativen Maximum mit einem bestimmten Abstand in Richtung heller (=nach rechts) angeordnet und/oder liegt auf einem bzw. dem relativen Minimum zwischen dem ersten relativen Maximum M1 und einem zweiten (dem nächstfolgenden helleren) relativen Maximum M2. Somit liegt direkt angrenzend (in Richtung heller=nach rechts in Fig. 5) an den Grauwertbereich R1 für die Pixel, die Poren darstellen, der Grauwertbereich R2 für die Pixel, die Oxide darstellen. Der oben beschriebene Schwellenwert S1, der dem Grauwert der hellsten Pixel der Poren entspricht, beschreibt gleichzeitig den dunkelsten Grauwert der Pixel, die genau nicht mehr als Oxide anzusehen sind. Wie der Schwellenwert S1 hat auch der Schwellenwert S2 einen bestimmten Abstand in Richtung heller zum Maximum M2 und/oder liegt auf einem relativen Minimum zwischen dem Maximum M2 und einem dritten Maximum M3 für die helleren Pixel der Fe-Matrix. Der Schwellenwert S2 definiert den Übergang in die Grauwerte der Pixel der Fe-Matrix, die somit in einem Grauwertbereich R3 liegen.

Alternativ bietet die im Stand der Technik bekannte "Otsu"-Methode eine Möglichkeit zur automatischen Erkennung und Berechnung der Bestandteile eines musterbasierten Histogramms. Im vorliegenden Anwendungsfall erkennt ein Schwellenwertverfahren nach der "Otsu"-Methode überlagerte, ähnliche Grauwertverteilungen der Poren-, Oxid- und Fe-Matrix-Bereiche und berechnet die Schwellenwerte als Grenze zwischen diesen Bereichen (Klassen).

Zur Oxid- und Porenmessung eines Einzelbildes ist gemäß der ersten Ausführungsform das gesamte Einzelbild als Verarbeitungsbereich festgelegt. In der Datenverarbeitungseinheit 32 wird jedes Pixel des jeweiligen Einzelbildes basierend auf den festgelegten Schwellenwerten (Grenzen) einer der drei Klassen (Poren, Oxide oder Fe-Matrix) zugeordnet und mit der entsprechenden Klasse oder einem der Klasse entsprechenden Marker markiert. Beispielsweise wird jedes Pixel einer Klasse in einer vorbestimmten Farbe dargestellt. Insbesondere können beispielsweise die als Poren klassifizierten Pixel rot markiert werden und die als Oxide klassifizierten Pixel blau markiert werden. Die Pixel der Fe-Matrix müssen für eine Poren- und Oxidmessung nicht berücksichtigt werden.

Die Datenverarbeitungseinheit 32 ist weiter dazu angepasst, die Anzahl der Pixel je Klasse, also die Anzahl der rot markierten/dargestellten Pixel und die Anzahl der blau markierten/dargestellten Pixel, in einem Auswertebereich, der dem Verarbeitungsbereich entspricht oder innerhalb desselben liegt, zu berechnen und auszugeben und/oder in der Speichereinheit 34 oder einem RAM Speicher zu speichern. Die so ermittelten Werte für Pixel einer Klasse in dem Auswertebereich, also Pixel, die Porenbereiche darstellen, und Pixel, die Oxidbereiche darstellen, können jeweils ins Verhältnis zu einer Gesamtzahl an Pixeln, die in dem Auswertebereich vorhanden sind, gesetzt werden, um eine relative Prozentangabe der Pixel, die Porenbereiche oder Oxidbereiche in dem Auswertebereich darstellen, zu erhalten.

In der vorliegenden Ausführungsform ist der Auswertebereich innerhalb des Verarbeitungsbereichs, der das ganze Einzelbild umfasst, gewählt. Es wird daher nicht das gesamte von der Bildaufnahmevorrichtung 28 aufgenommene Einzelbild, das bereichsweise beispielsweise auch einen Querschnitt durch den beschichteten Bereich des Bauteils zeigen kann, verarbeitet und ausgewertet, sondern nur ein bestimmter Auswertebereich davon. In dem Auswertebereich des Einzelbildes ist bevorzugt ausschließlich die Oberfläche der Beschichtung darstellt.

Die Position und Größe des Auswertebereichs kann vorgegeben (bei bekannter Position der Beschichtung), durch einen Bediener beispielsweise anhand des Livebilds manuell eingestellt werden oder automatisch berechnet werden. Der Auswertebereich kann ein Ausschnitt eines Einzelbildes oder das gesamte Einzelbild (beispielsweise falls nur die Oberfläche der Beschichtung aufgenommen wird) sein. Der Auswertebereichs wird bevorzugt durch einen Auswahlrahmen 54 (siehe Fig. 6) festgelegt.

Zur Bestimmung eines Poren- und Oxidverhältnisses in der Oberfläche der Beschichtung wird der Auswahlrahmen 54 respektive der Auswertebereich so gewählt, dass bei der Berechnung der Werte maximal nur diejenigen Bereiche des Einzelbildes der Schliffprobe berücksichtigt werden, die auch die Beschichtung zeigen. Somit kann eine Verfälschung der berechneten Werte aufgrund von Poren- und Oxidbereichen oder Bereichen mit ähnlichem Grauwert in dem Querschnitt des Körpers des beschichteten Bauteils vermieden werden. Da jedes Pixel eines Einzelbildes, das einer der Klassen zugeordnet wird, im wesentlichen (näherungsweise) einem entsprechenden realen Bereich der Schliffprobe entspricht, stimmen die berechneten Werte näherungsweise auch mit einem realen Wert überein.

Die so für ein einzelnes Einzelbild bzw. einen Auswertebereich aus einem Einzelbild berechneten Werte können als ein Wertepaar in der Speichereinheit 34 abgespeichert werden.

In der Anzeigevorrichtung 36, die beispielsweise ein Bildschirm ist, wird die aktuell mit der Bildaufnahmevorrichtung 28 aufgenommene Bildfolge einem Benutzer angezeigt, wobei die Pixel, die Porenbereiche darstellen, und die Pixel, die Oxidbereiche darstellen, in der ihr jeweils zugeordneten Farbe angezeigt werden. Insbesondere wird das mit der Bildaufnahmevorrichtung 28 aktuell aufgenommene Einzelbild der Bildfolge in Echtzeit in der Datenverarbeitungseinheit 32 verarbeitet, so dass das Einzelbild live (in einem Livebild der Bildaufnahmevorrichtung 28) mit durch das Schwellenwertverfahren segmentierten (farblich markierten oder eingefärbten) Pixeln auf der Anzeigevorrichtung 36 angezeigt wird.

Fig. 6 zeigt eine beispielhafte Bildschirmansicht 42, wie sie auf der Anzeigevorrichtung 36 während des Betriebs der Vorrichtung 24 als Livebild dargestellt wird. Livebild bedeutet, wie oben angegeben, dass das mit der Bildaufnahmevorrichtung 28 aufgenommene Bild nahezu zeitgleich mit seiner Aufnahme in seiner bereits verarbeiteten (segmentierten) Form dargestellt wird.

Der in dem Einzelbild (Livebild) (Fig. 6) dargestellte Bereich einer Schliffprobe ist beispielsweise durch Abschleifen des in ein Einbettmittel eingebetteten Würfels senkrecht zur Zeichenebene entlang der Linie B-B (Y-Z-Ebene) in Fig. 2 hergestellt. In der Darstellung von Fig. 6 sind drei vertikal übereinander angeordnete Bereiche 44, 46, 48 vorhanden, von denen der mittlere Bereich 46 eine Querschnittsansicht der Beschichtung 14, der obere Bereich 44 beispielhaft eine Querschnittsansicht durch den beschichteten Bereich des Probeteils 20, also eines Teils der beschichteten Wand des Zylinders 12, und der untere Bereich 48 beispielhaft eine Querschnittsansicht durch das Einbettmittel der Schliffprobe darstellt.

Die Querschnittsansicht 44 des beschichteten Bereichs (nicht der Beschichtung selbst) des Probeteils 20 und die Querschnittsansicht des Einbettmittels sind vereinfacht ohne jegliche Struktur dargestellt. In dem mittleren Bereich 46, der Querschnittsansicht der Beschichtung, sind die Porenbereiche 50 beispielsweise rot (hier zur besseren Unterscheidung schwarz gefüllt) und die Oxidbereiche beispielsweise blau (hier zur besseren Unterscheidung weiß gefüllt mit schwarzem Rand) dargestellt.

Weiter wird der oben beschriebene Auswahlrahmen 54 zur Auswahl eines auszuwertenden Auswertebereiches dargestellt, dessen Größe und Position beispielsweise über die Bedienereingabeeinheit 38 eingestellt werden kann. Weiter sind bevorzugt ein Namensfeld 56, in dem ein vom Bediener eingegebener oder automatisch generierter Name der Bildfolge bzw. Messreihe angegeben wird, und ein Maßstabsfeld 58, in dem der aktuell verwendete Maßstab angezeigt ist, vorgesehen.

Die innerhalb des Auswahlrahmens 54, d.h. in dem Auswertebereich vorhandenen Anteile an Poren und Oxiden (Anzahl an roten bzw. blauen Pixeln, die als Poren bzw. Oxide identifiziert wurden, im Verhältnis zu der Gesamtanzahl an Pixeln in dem Auswahlrahmen 54) werden bevorzugt in einem (aktuellen) Werte-Anzeigebereich 60 angezeigt. In der Anzeigevorrichtung 36 wird also ein segmentiertes Einzelbild samt der dem Einzelbild entsprechenden Verhältniswerte (Wertepaare) in Echtzeit angezeigt.

Die Datenverarbeitungseinheit 32 ist weiter dazu angepasst, das aktuell berechnete Wertepaar aus dem ersten Wert und dem zweiten Wert automatisch oder auf Anforderung durch einen Bediener über die Bedienereingabeeinheit 38 in der Speichereinheit 34 beispielsweise in einer Tabelle zu speichern. Optional können die gespeicherten Werte, d. h. die Tabelle, in einem entsprechenden Anzeigebereich in der Bildschirmansicht angezeigt werden.

Beispielsweise nach Änderung der Position der Schliffprobe 18 bezüglich der Bildaufnahmevorrichtung 28 und der damit verbundenen Änderung des aufgenommenen Bereichs der Schliffprobe 18 und/oder nach Änderung der Größe und/oder Position des Auswahlrahmens 54 und der damit verbundenen Änderung des auszuwertenden Auswertebereichs in dem Einzelbild kann ein wiederum aktuell berechnetes und in der Bildschirmansicht 42 bzw. Anzeigevorrichtung 36 angezeigtes weiteres Wertepaar aus einem weiteren ersten Wert und einem weiteren zweiten Wert automatisch oder auf Anforderung durch einen Bediener über die Bedienereingabeeinheit 38 in der Speichereinheit 34 in derselben Tabelle gespeichert werden. Auf dieselbe Weise können weitere Wertepaare gewonnen und abgespeichert werden.
Die Datenverarbeitungseinheit 32 ist bevorzugt weiter dazu angepasst, die in der Tabelle gespeicherten Werte auszuwerten. Erfindungsgemäß wird ein erster Mittelwert (Durchschnitt) der ersten Werte und ein zweiter Mittelwert (Durchschnitt) der zweiten Werte berechnet und abgespeichert und bevorzugt in einem Mittelwert-Anzeigebereich 62 in der Bildschirmansicht 42 angezeigt. Der Mittelwert kann dabei ab dem ersten Wertepaar angezeigt werden und mit jedem gespeicherten Wertepaar aktualisiert werden. Weiter können Werte wie eine Standardabweichung und/oder maximale und minimale Werte der ersten und zweiten Werte berechnet, gespeichert und auch angezeigt werden.
Nach Abschluss einer Messreihe, das heißt, der Beendigung der Speicherung von Wertepaaren liegen die für diese Messreihe bestimmten ersten und zweiten Mittelwerte vor. Die Datenverarbeitungseinheit 32 ist weiter so ausgebildet, dass automatisch oder durch einen Bediener ein Referenzbild erzeugt werden kann. Hierzu wird durch eine Änderung der Position der Schliffprobe 18 bezüglich der Bildaufnahmevorrichtung 28 und/oder durch Änderung der Größe und/oder Position des Auswahlrahmens 54 und der damit verbundenen Änderung des auszuwertenden Auswertebereichs vorzugsweise ein aktueller erster Messwert gesucht, dessen erster Wert dem berechneten Mittelwert nahe kommt oder mit diesem übereinstimmt. Der durch den entsprechenden Auswahlrahmen definierte Bildbereich, also der Auswertebereich des Einzelbildes, wird als Referenzbild (repräsentatives Bild) gespeichert. Alternativ kann ein dem zweiten Wert oder beiden Werten möglichst nahekommender Bildbereich gewählt werden. Auch eine Auswahl nach einem der anderen Werte, wie Maximalwert oder ähnliches, ist möglich. Des Weiteren kann vorzugsweise auch das gesamte, dem Auswertebereich entsprechende Einzelbild, unabhängig davon, ob der Auswertebereich sich über das gesamte Einzelbild erstreckt oder nicht, als Referenzbild gespeichert werden.
Die gespeicherten Werte (erste Werte und zweite Werte und Mittelwerte) werden zusammen mit dem Referenzbild gespeichert (beispielsweise in einem gemeinsamen Verzeichnis oder in den Metadaten des Referenzbilds) und/oder miteinander verlinkt, so dass eine spätere Zuordnung der Daten zu dem Referenzbild sichergestellt werden kann. Bevorzugt werden noch weitere Attribute wie Name der Bildfolge bzw. Messreihe etc. gespeichert und/oder verlinkt.

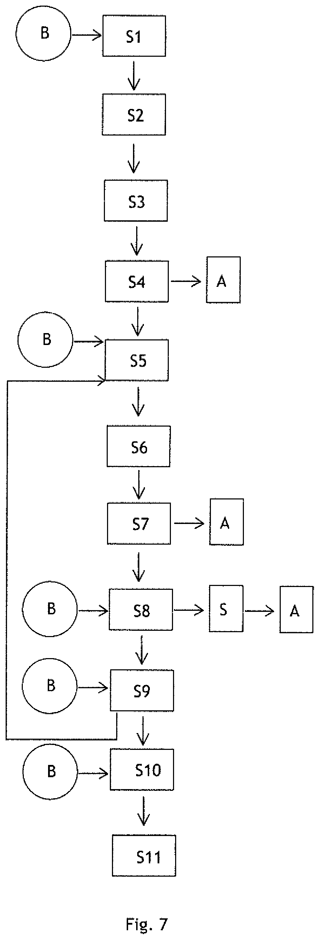

Mit der so ausgebildeten Vorrichtung kann bevorzugt das in der Fig. 7 dargestellte und im Folgenden beschriebene Verfahren durchgeführt werden.

In einem ersten Schritt S1 wird die Schliffprobe 18 durch den Bediener (siehe Kreis mit "B" in Fig. 7) so bezüglich der Bildaufnahmevorrichtung 28 positioniert, dass die Bildaufnahmevorrichtung 28 die Oberfläche der Schliffprobe 18, insbesondere den Bereich der Oberfläche der Schliffprobe 18, der einen Querschnitt durch die Beschichtung 14 darstellt, aufnehmen kann.

In einem zweiten Schritt S2 erfolgt die Aufnahme der Bildfolge aus Einzelbildern mittels der Bildaufnahmevorrichtung 28. Ferner werden die gewonnenen Daten an die Datenverarbeitungseinheit 32 weitergegeben.

In einem dritten Schritt S3 wird der Verarbeitungsbereich jedes aufgenommenen Bildes (hier das gesamte Bild) in Echtzeit mit der Aufnahme, d.h. live bzw. online, verarbeitet. In der Verarbeitung wird die Segmentierung anhand von Grauwertbereichen durchgeführt, so dass Pixel die Porenbereiche darstellen von Pixeln, die Oxidbereiche darstellen, unterschieden werden können, beispielsweise durch unterschiedliche farbliche Markierung derselben.

In einem vierten Schritt S4 werden die so verarbeiteten Einzelbilder in Echtzeit, d.h. live, auf der Anzeigevorrichtung 36 (siehe Rechteck mit "A" in Fig. 7) angezeigt.

In einem fünften Schritt S5 wählt der Bediener mittels der Bedienereingabeeinheit 38 einen ersten auszuwertenden Auswertebereich in einem Einzelbild durch Festlegen des Auswahlrahmens 54 in der Bildschirmansicht 42. Des Weiteren erfolgt hier ein Fokussieren entweder durch den Bediener oder automatisch.

Mit dem Festlegen des Auswahlrahmens 54 berechnet die Datenverarbeitungseinheit 32 in einem sechsten Schritt S6 das Verhältnis der innerhalb des Auswahlrahmens 54 angezeigten Pixel, die Porenbereiche darstellen, bezüglich der Gesamtzahl an Pixeln innerhalb des Auswahlrahmens 54 als einen ersten Wert und das Verhältnis der innerhalb des Auswahlrahmens 54 angezeigten Pixel, die Oxidbereiche darstellen, bezüglich der Gesamtzahl an Pixeln innerhalb des Auswahlraums 54 als einen zweiten Wert. Die Werte bilden ein Wertepaar.

In einem siebten Schritt S7 werden der berechnete erste Wert und der berechnete zweite Wert und ggfs. entsprechende Mittelwerte mittels der Anzeigevorrichtung 36 angezeigt.

In einem achten Schritt S8 werden der berechnete erste Wert und der berechnete zweite Wert auf einen über die Bedienereingabeeinheit 38 eingegebenen Befehl in der Speichereinheit 34 abgespeichert (siehe Rechteck mit "S" in Fig. 7). Zu allen gespeicherten Wertepaaren werden ein erster Mittelwert für die ersten Werte und ein zweiter Mittelwert für die zweiten Werte berechnet, gespeichert und angezeigt.

In einem neunten Schritt S9 wird die Position der Schliffprobe 18 bezüglich der Bildaufnahmevorrichtung 28 und/oder die Position und/oder Größe des Auswahlrahmens 54 durch einen Bediener derart verändert, dass durch den Auswahlrahmen 54 ein bezüglich des ersten auszuwertenden Auswertebereichs verschiedener, bevorzugt nicht überlappender Auswertebereich ausgewählt werden kann.

Mit-der Veränderung der Position der Schliffprobe springt das Verfahren zu Schritt S5 zurück. Es wird also zunächst wieder ein auszuwertender Bereich ausgebwählt (S5). Anschließend werden in dem darauffolgenden Schritt S6 ein weiterer erster Wert und ein weiterer zweiter Wert (weiteres Wertepaar) berechnet und gespeichert.

Die Schritte S5 bis S9 werden so oft ausgeführt, bis'der Bediener in Schritt S9 einen Ende-Befehl eingibt, beispielsweise wenn die geforderte Anzahl an Messungen für eine statistische Auswertung erreicht ist.

In einem Schritt S10 ändert der Bediener die Position der Schliffprobe 18 bezüglich der Bildaufnahmevorrichtung 28 und/oder die Position und/oder Größe des Auswahlrahmens 54 derart, dass der aktuelle erste Wert, der sich aus dem mittels des Auswahlrahmens 54 ausgewählten Auswertebereich ergibt, möglichst nahe bei dem berechneten Mittelwert der ersten Werte liegt oder diesen trifft.

In einem Schritt S11 wird der Bildbereich, der in Schritt S10 mittels des Auswahlrahmens 54 festgelegt wird, mit den gespeicherten Werten als Referenzbild gespeichert oder mit diesen verlinkt und das Verfahren beendet.

In einer besonders vorteilhaften Ausgestaltung kann bei Über- oder Unterschreiten von vorgegebenen Grenzwerten für die Mittelwerte oder für Einzelwerte oder errechnete Standardabweichungen oder Ähnliches ein Fehlersignal ausgegeben werden.

Im Weiteren werden Modifikationen der oben beschriebenen Vorrichtung bzw. des oben beschrieben Verfahrens beschrieben, die, wenn nicht anders beschrieben, einzeln oder zusammen mit den bezüglich der ersten Ausführungsform beschriebenen oder mit den in den Ansprüchen enthaltenen Merkmalen kombiniert werden können.

Die im Folgenden beschriebene zweite Ausführungsform entspricht der ersten Ausführungsform mit Ausnahme der anders beschriebenen Vorrichtungsmerkmale und Verfahrensschritte.

Ist gewährleistet, dass die Umgebungsbedingungen nahezu konstant bleiben und Position und Ausrichtung der Schliffproben wiederholgenau sind, lässt sich mit Hilfe einiger Modifizierungen ein vollautomatisierter Messablauf realisieren. In diesem Fall kann auf die Anzeigevorrichtung verzichtet werden. In der Vorrichtung gemäß einer solchen zweiten Ausführungsform ist der Messtisch 26 mittels einer Antriebsvorrichtung 30 elektronisch, d.h. von der Datenverarbeitungseinheit 32 gesteuert verfahrbar (beispielsweise ist das Spindelgetriebe 30 elektrisch angetrieben). Des Weiteren weist die Bildaufnahmevorrichtung eine Auto-Fokus-Funktion auf, die jeder bekannten Bildaufnahmesoftware zur Verfügung steht.

Eine Schliffprobe 18 wird in dieser Ausführungsform beispielsweise an einer vorgegebenen Position auf dem Messtisch 26 abgelegt. Der Messtisch 26 wird anschließend von der Datenverarbeitungseinheit 32 so verfahren, dass mit der Bildaufnahmevorrichtung 28 eine Bildfolge von der zu messenden Oberfläche der Schliffprobe 18 aufgenommen werden kann. Zur Bestimmung der gewünschten Position kann die Datenverarbeitungseinheit 32 aus der mit der Bildaufnahmevorrichtung 28 aufgenommenen Bildfolge eine Ist-Position der Schliffprobe 18 ermitteln (beispielsweise mit Hilfe eines Bildsegmentierungsverfahrens) und den Messtisch 26 so steuern, dass eine Soll-Position erreicht wird. Eine Suchfunktion kann kleine Positions- und Ausrichtungsabweichungen der in der Schliffprobe eingebetteten Beschichtungen kompensieren.

Nach Erreichen der Soll-Position wird, wie in der ersten Ausführungsform, die Segmentierung der Einzelbilder zur Berechnung der ersten und zweiten Werte in Echtzeit durchgeführt. Eine automatisierte Analyse des Histogramms der Grauwerte der Pixel kompensiert Schwankungen der Belichtung/Helligkeit des Livebilds. Die Schwellenwerte und damit die Grauwertbereiche können automatisch ermittelt werden (beispielsweise mittels Otsu-Verfahren). Verschiebt sich ein Maximum oder ein Minimum durch veränderte Schichtbeschaffenheit oder Randbedingungen, regelt die Software den Grauschwellenwert für Poren oder Oxide nach.

Zur Bestimmung des zu messenden Auswertebereichs eines Einzelbildes, d.h. zur Positionierung des Auswahlrahmens 54 derart, dass nur die Oberfläche der Beschichtung gemessen wird, kann beispielsweise eine weitere Segmentierung nach Grauwerten durchgeführt werden, die den Querschnitt durch die beschichtete Oberfläche von der Beschichtung selbst unterscheidet. Alternativ können die Schliffproben 18 und die Positionierung bezüglich der Bildaufnahmevorrichtung 28 derart aufeinander abgestimmt sein, dass die Beschichtung immer an einer vorbestimmten Position, die der Position des Auswahlrahmens 54 entspricht, angeordnet ist.

Mit der Festlegung des Auswahlrahmens 54 kann das erste Wertepaar erfasst und gespeichert werden. Anschließend wird die Schliffprobe 18 mittels des Messtisches 26 derart verfahren, dass der Auswahlrahmen einen zu dem ersten Auswertebereich verschiedenen Auswertebereich erfasst. Beispielsweise kann der Messtisch um einen vorbestimmten Weg verfahren werden.

In einem nächsten Schritt wird das nächste Wertepaar erfasst und gespeichert. Nachdem eine voreingestellte Anzahl an Wertepaaren erfasst wurde, werden entsprechende Mittelwerte berechnet. Anschließend kann die Datenverarbeitungseinheit 32 den Messtisch derart verfahren, dass ein Auswertebereich erfasst und der durch ihn definierte Bildbereich gespeichert wird, dessen erster Wert dem ersten Mittelwert nahe kommt, und diesen als Referenzbild speichern. Die Messdaten und errechneten Mittelwerte können mit dem Referenzbild gespeichert oder mit diesem verlinkt werden.

Gegebenenfalls können die so gewonnenen Daten (Bildbereich und zugehörige Messdaten) über die Ausgabeeinheit 40 an weitere Systeme übergeben werden oder über die Anzeigevorrichtung angezeigt werden.

In einer besonders vorteilhaften Ausgestaltung kann bei Über- oder Unterschreiten von vorgegebenen Grenzwerten für die Mittelwerte oder für Einzelwerte oder errechnete Standardabweichungen ein Fehlersignal ausgegeben werden.

Folgende weitere Modifikationen, die mit den obigen Ausführungsformen oder den in den Ansprüchen beschriebenen Merkmalen kombiniert werden können sind möglich:
In der oben beschrieben Ausführungsform ist der Verarbeitungsbereich so festgelegt, dass er das gesamte aufgenommene Einzelbild umfasst. Dies hat den Vorteil, dass zur Wahl des Auswertebereichs über die Poren- und Oxidbereiche der Beschichtung einfach festgestellt werden kann, wo die Beschichtung beginnt. Zur Einsparung von Rechenleistung kann der Verarbeitungsbereich bevorzugt so gewählt werden, dass er ausschließlich Bereiche des Einzelbildes umfasst, die die Oberfläche der Beschichtung zeigen. In diesem Fall kann der Auswertebereich dem Verarbeitungsbereich bevorzugt entsprechen. Alternativ kann der Verarbeitungsbereich zumindest alle Bereiche, die die Oberfläche der Beschichtung zeigen als beispielsweise Rechteckrahmen umschließen. In diesem Fall muss der Auswertebereich wieder innerhalb des Verarbeitungsbereichs liegen.

Der Verarbeitungsbereich kann analog dem Auswertebereich manuell durch einen Bediener oder automatisch durch die Datenverarbeitungseinheit gewählt werden oder voreingestellt sein.

Die Speicherung eines Wertepaares kann beispielsweise automatisch dann erfolgen, wenn ein Einzelbild fokussiert ist und der gegebenenfalls vorhandene Auswahlrahmen festgelegt ist. Die Speicherung des weiteren Wertepaares kann beispielsweise automatisch erfolgen, wenn erkannt wurde, dass ein anderer Auswertebereich aufgenommen wird; Dies kann beispielsweise durch einen Vergleich der Einzelbilder der Bildfolge erkannt werden. Die Anzahl der minimal aufzunehmenden Wertepaare kann voreingestellt sein.

Die Beschriftungen (Name der Schicht, Datum, Maßstab und Ergebnis der statistischen Auswertung) der beiden Größen Poren- und Oxidanteil können automatisch ins Bild eingefügt und abgespeichert werden. Somit werden das Referenzbild und die Ergebnisse der Schichtanalyse gemeinsam abgespeichert. Dadurch werden Verwechslungen vermieden.

Statt durch Verfahren des Messtisches kann die Relativbewegung zwischen Schliffprobe und Bildaufnahmevorrichtung auch durch Verfahren der Bildaufnahmevorrichtung mittels einer entsprechenden Verfahrvorrichtung, wie beispielsweise einem Getriebe, erreicht werden.

Sowohl der Messtisch als auch die Bildaufnahmevorrichtung können elektrisch, pneumatisch oder hydraulisch betätigt verfahrbar sein.

Die einzelnen Einheiten und Vorrichtungen können getrennt voneinander und/oder integral ausgebildet sein. Beispielsweise kann die Anzeigevorrichtung und/oder die Datenverarbeitungseinheit räumlich getrennt zu der schematisch gezeigten Vorrichtung 24 in Fig. 4 ausgebildet sein. Die Datenverarbeitungseinheit kann wiederum integral mit der Bildaufnahmevorrichtung und/oder der Anzeigeeinheit ausgebildet sein.

Die Datenverarbeitungseinheit kann statt dem Verhältnis von Pixeln, die Poren- und Oxidbereiche darstellen, auch nur die Anzahlen der Pixel berechnen und in eine Tabelle eintragen. Diese Anzahlen oder deren Mittelwerte können dann ins Verhältnis zu beispielsweise einer Gesamtzahl an Pixeln gesetzt werden, die die Beschichtung darstellen. Alternativ kann eine Qualitätsaussage bei bekannter oder gleichbleibender Größe der Beschichtung in dem Einzelbild auch nur durch die berechneten Anzahlen der Pixel erreicht werden.

Die Sollanzahl von Messwertpaaren liegt bevorzugt bei 5 bis 50 Messwertpaaren, noch bevorzugter bei 7 bis 30 Messwertpaaren, und noch bevorzugter bei 10 bis 15 Messwertpaaren, wie beispielsweise 10, 12 oder 15 Messwertpaaren für jeweils einen Bereich mit annähernd gleichen Schichteigenschaften.

Die Frequenz mit der die Einzelbilder aufgenommen werden liegt bevorzugt zwischen 1 Hz und 100 Hz, noch bevorzugter zwischen 10 Hz und 30 Hz, und noch bevorzugter zwischen 25Hz und 30 Hz, wie beispielsweise 25 Hz oder 30 Hz.

### Bezugszeichenliste

- 10: Zylinderkurbelgehäuse
- 12: Zylinder
- 14: Beschichtung
- 16: Innenoberfläche
- 18: Schliffprobe
- 20: Probeteil
- 22: Quaderteil
- 24: Vorrichtung
- 26: Messtisch
- 28: Bildaufnahmevorrichtung
- 30: Getriebe (Antriebsvorrichtung)
- 32: Datenverarbeitungseinheit
- 34: Speichereinheit
- 36: Anzeigevorrichtung
- 38: Bedienereingabeeinheit
- 40: Ausgabeeinheit
- S1: erster Schwellenwert
- S2: zweiter Schwellenwert
- R1: erster Grauwertbereich
- R2: zweiter Grauwertbereich
- R3: dritter Grauwertbereich
- M1: erstes Maximum
- M2: zweites Maximum
- M3: drittes Maximum
- 42: Bildschirmansicht (angezeigtes Einzelbild)
- 44: Querschnittsansicht beschichteter Teil
- 46: Querschnittsansicht Beschichtung
- 48: Querschnittsansicht Einbettmittel
- 50: Porenbereich
- 52: Oxidbereich
- 54: Auswahlrahmen
- 56: Namensfeld
- 58: Maßstabsfeld
- 60: Werte-Anzeigebereich
- 62: Mittelwerte-Anzeigebereich

## Patentansprüche

1. Verfahren zur Prüfung der Qualität einer Oberfläche einer Beschichtung eines Bauteils, mit folgenden Schritten:
Aufnehmen einer Bildfolge mit Einzelbildern verschiedener Bereiche einer Oberfläche des Bauteils mittels einer elektronischen Bildaufnahmevorrichtung (28),
Verarbeiten eines Verarbeitungsbereichs jedes aufgenommenen Einzelbildes in Echtzeit in einer Datenverarbeitungseinheit (32) derart, dass in dem Verarbeitungsbereich dargestellte Porenbereiche (50) und Oxidbereiche (52) der Beschichtung in dem verarbeiteten Bild voneinander unterscheidbar markiert werden,
Speichern von Wertepaaren mit einem ersten Wert und einem zweiten Wert für verschiedene verarbeitete Einzelbilder in einer Speichereinheit (34), wobei der erste Wert eine erste Anzahl von Pixeln, die in einem Auswertebereich, der dem Verarbeitungsbereich entspricht oder innerhalb desselben liegt, des aktuell verarbeiteten Einzelbilds (42) Porenbereiche (50) darstellen, oder ein Verhältnis der ersten Anzahl von Pixeln zu einer Gesamtanzahl von Pixeln in dem Auswertebereich angibt, und der zweite Wert eine zweite Anzahl von Pixeln, die in dem Auswertebereich des aktuell verarbeiteten Einzelbilds (42) Oxidbereiche (52) darstellen, oder ein Verhältnis der zweiten Anzahl von Pixeln zu einer Gesamtanzahl von Pixeln in dem Auswertebereich angibt, und
Berechnen eines ersten Mittelwertes der ersten Werte und eines zweiten Mittelwertes der zweiten Werte in der Datenverarbeitungseinheit (32) und Speichern der berechneten Mittelwerte in der Speichereinheit (34).

2. Verfahren nach Anspruch 1, mit dem weiteren Schritt
Anzeigen jedes verarbeiteten Bildes in Echtzeit auf einer Anzeigevorrichtung (36) derart, dass die markierten Porenbereiche (50) und Oxidbereiche (52) in dem angezeigten Einzelbild (42) voneinander unterscheidbar angezeigt werden.

3. Verfahren nach Anspruch 2, bei dem
mit der Anzeige jedes verarbeiteten Einzelbildes (42) in Echtzeit auf der Anzeigevorrichtung (36) der erste Wert und der zweite Wert angezeigt werden, die basierend auf dem in dem jeweils angezeigten Einzelbild (42) vorhandenen Auswertebereich berechnet sind.

4. Verfahren nach einem der Ansprüche 1 bis 3, mit den weiteren Schritten
Auswählen eines Auswertebereichs, dessen erster Wert dem ersten Mittelwert entspricht oder nahe kommt oder dessen zweiter Wert dem zweiten Mittelwert entspricht oder nahe kommt, und
Verknüpfen oder gemeinsames Speichern des ausgewählten Auswertebereichs oder des dem Auswertebereich entsprechenden Einzelbildes als Referenzbild mit dem ersten und zweiten Mittelwert.

5. Verfahren nach Anspruch 4, bei dem
jedes Referenzbild mit mindestens einem aus einem Namen der Messreihe, der Oberfläche, dem Datum der Aufnahme, dem Maßstab gespeichert wird.

6. Verfahren nach einem der Ansprüche 1 bis 5, mit den weiteren Schritten
Speichern jedes Einzelbildes (42), für das ein Wertepaar gespeichert wird und Verknüpfen jedes gespeicherten Einzelbilds mit dem entsprechenden Wertepaar.

7. Verfahren nach einem der Ansprüche 1 bis 5, bei dem
die Einzelbilder, für die die Wertepaare gespeichert wurden, nicht gespeichert werden, oder
die Einzelbilder, für die die Wertepaare gespeichert wurden, nicht dauerhaft in der Speichereinheit (34) gespeichert werden, und/oder
der Verarbeitungsbereich das gesamte aufgenommene Bild umfasst, und/oder
der Auswertebereich ein Bereich des Einzelbildes ist, der ausschließlich die Beschichtung darstellt.

8. Verfahren nach einem der Ansprüche 1 bis 7, mit den weiteren Schritten .
Bewegen des Bauteils bezüglich der Bildaufnahmevorrichtung (28) oder umgekehrt mittels einer mit der Datenverarbeitungseinheit (32) gesteuerten Antriebsvorrichtung zum Aufnehmen der Bildfolge mit den Einzelbildern verschiedener Bereiche der Oberfläche des Bauteils mittels der Bildaufnahmevorrichtung (28), und/oder
automatisches Fokussieren der Bildaufnahmevorrichtung (28), und/oder
Ausgeben eines Fehlersignals wenn einer der Mittelwerte über einem jeweiligen vorbestimmten oberen Grenzwert oder unter einem jeweiligen vorbestimmten unteren Grenzwert liegt.

9. Verfahren nach einem der Ansprüche 1 bis 8, mit den weiteren Schritten
Berechnen und Speichern einer Standardabweichung der ersten Werte und/oder Speichern eines maximalen und eines minimalen ersten Wertes, und/oder
Berechnen und Speichern einer Standardabweichung der zweiten Werte und/oder Speichern eines maximalen und eines minimalen zweiten Wertes, und
optionales Speichern der Mittelwerte und/oder der Standardabweichungen und/oder der maximalen und minimalen Werte in den Metadaten des Referenzbildes oder Verknüpfen derselben mit dem Referenzbild.

10. Verfahren nach einem der Ansprüche 1 bis 9, bei dem
die Porenbereiche (50) einen dunkleren Grauwert als die Oxidbereiche (52) aufweisen und die Oxidbereiche (52) einen dunkleren Grauwert als die übrigen Bereiche des Bereichs der Oberfläche aufweisen,
zur Markierung der Porenbereiche (50) und Oxidbereiche (52) in der Verarbeitung jedes aufgenommenen Einzelbildes ein Pixel mit einem ersten Grauwertbereich als Porenbereich (50) markiert wird und ein Pixel mit einem zweiten Grauwertbereich als Oxidbereich (52) markiert wird, und
die Grauwertbereiche bzw. deren Grenzen optional nach der Otsu-Methode ermittelt werden.

11. Verfahren nach einem der Ansprüche 1 bis 10, bei dem
das Bauteil eine Schliffprobe (18) einer mit einer Beschichtung versehenen Zylinderlauffläche eines Zylinderkurbelgehäuses (10) ist und die Oberfläche der Schliffprobe (18) in dem Bereich, der mittels der Bildaufnahmevorrichtung (28) aufgenommen wird, mindestens teilweise aus der Beschichtung ausgebildet wird, und
optional eine automatische Erkennung des Bereichs, der aufzunehmen ist, erfolgt.

12. Verfahren nach einem der Ansprüche 1 bis 11, mit den weiteren Schritten
Auswählen des Auswertebereichs in dem Einzelbild, für den der erste Wert und der zweite Wert berechnet wird; mittels einer Bedienereingabeeinheit (38), oder
Automatisches Auswählen des Auswertebereichs in dem Einzelbild, für den der erste Wert und der zweite Wert berechnet werden, mittels eines in der Datenverarbeitungseinheit (32) durchgeführten Schwellenwertverfahrens.

13. Bildverarbeitungsvorrichtung zur Prüfung der Qualität einer Oberfläche einer Beschichtung eines Bauteils, mit
einer elektronischen Bildaufnahmevorrichtung (28), die ausgebildet ist zum Aufnehmen einer Bildfolge mit Einzelbildern verschiedener Bereiche einer Oberfläche eines Bauteils (18),
einer Datenverarbeitungseinheit (32), die ausgebildet ist zum Verarbeiten eines Verarbeitungsbereichs jedes aufgenommen Einzelbildes in Echtzeit derart, dass in dem Verarbeitungsbereich dargestellte Porenbereiche (50) und Oxidbereiche (52) der Beschichtung in dem verarbeiteten Bild voneinander unterscheidbar markiert werden, zum Berechnen von Wertepaaren mit einem ersten Wert und einem zweiten Wert für verschiedene verarbeitete Einzelbilder, wobei der erste Wert eine erste Anzahl von Pixeln, die in einem Auswertebereich, der dem Verarbeitungsbereich entspricht oder innerhalb desselben liegt, des aktuell verarbeiteten Einzelbilds (42) Porenbereiche (50) darstellen, oder ein Verhältnis der ersten Anzahl von Pixeln zu einer Gesamtanzahl von Pixeln in dem Auswertebereich angibt, und der zweite Wert eine zweite Anzahl von Pixeln, die in dem Auswertebereich des aktuell verarbeiteten Einzelbilds (42) Oxidbereiche (52) darstellen, oder ein Verhältnis der zweiten Anzahl von Pixeln zu einer Gesamtanzahl von Pixeln in dem Auswertebereich angibt, und zum Berechnen eines ersten Mittelwertes der ersten Werte und eines zweiten Mittelwertes der zweiten Werte, und
einer Speichereinheit (34), die ausgebildet ist zum Speichern der Wertepaare und der Mittelwerte.

14. Bildverarbeitungsvorrichtung nach Anspruch 13, die weiter aufweist
eine Anzeigevorrichtung (36), die ausgebildet ist zum Anzeigen jedes verarbeiteten Bildes in Echtzeit derart, dass die Porenbereiche und die Oxidbereiche in dem angezeigten Bild voneinander unterscheidbar markiert angezeigt werden, und
optional mit der Anzeige jedes verarbeiteten Einzelbildes (42) in Echtzeit auf der Anzeigevorrichtung (36) der erste Wert und der zweite Wert angezeigt werden, die basierend auf dem in dem jeweils angezeigten Einzelbild (42) vorhandenen Auswertebereich berechnet sind.

15. Bildverarbeitungsvorrichtung nach Anspruch 13 oder 14, bei der
die Anzeigevorrichtung (36) ausgebildet ist zum Ausgeben eines Fehlersignals, wenn einer der Mittelwerte über einem jeweiligen vorbestimmten oberen Grenzwert oder unter einem jeweiligen vorbestimmten unteren Grenzwert liegt, und/oder
eine Ausgabeeinheit (40) vorgesehen ist, die ausgebildet ist zum Ausgeben eines Fehlersignals, wenn einer der Mittelwerte über einem jeweiligen vorbestimmten oberen Grenzwert oder unter einem jeweiligen vorbestimmten unteren Grenzwert liegt.

## Claims

1. Method for assessing the quality of a surface of a coating of a component, including the following steps:
capturing an image sequence having individual images of different regions of a surface of the component using an electronic image capture device (28),
processing a processed region of each captured individual image in real time in a data processing unit (32) such that pore regions (50) and oxide regions (52) of the coating, which pore regions (50) and oxide regions (52) are depicted in the processed region, are marked in the processed image in a manner that they are differentiable from each other,
storing value pairs with a first value and second value for different processed individual images in a storage unit (34), wherein the first value specifies a first number of pixels, which represent pore regions (50) in an analysis region that corresponds to the processed region or that lies therein, of the individual image (42) currently being processed, or a ratio of the first number of pixels to a total number of pixels in the analysis region, and the second value specifies a second number of pixels that represent oxide regions (52) in the analysis region of the individual image (42) currently being processed, or a ratio of the second number of pixels to a total number of pixels in the evaluation region, and
calculating, in the data processing unit (32), a first average value of the first values and a second average value of the second values and storing of the calculated average values in the storage unit (34).

2. Method according to claim 1, including the further step
displaying of each processed image in real time on a display device (36) such that the marked pore regions (50) and the marked oxide regions (52) are displayed in the displayed individual image (42) in a manner that they are differentiable from each other.

3. Method according to claim 2, wherein
the first value and the second value are displayed on the display device (36) with the display of each processed individual image (42) in real time, the first value and the second value being calculated based on the analysis region present in the respectively displayed individual image (42).

4. Method according to one of claims 1 to 3, including the further steps
selecting an analysis region, whose first value corresponds to the first average value or is close to it or whose second value corresponds to the second average value or is close to it, and
linking or storing together the selected analysis region or the individual image corresponding to the analysis region as a reference image with the first and second average value.

5. Method according to claim 4, wherein
each reference image is stored with at least one of: a name of the measurement series, the surface, the date of the capture, or the scale.

6. Method according to one of claims 1 to 5, including the further steps
storing each individual image (42) for which a value pair is stored, and linking each stored individual image to the corresponding value pair.

7. Method according to one of claims 1 to 5, wherein
the individual images, for which the value pairs have been stored, are not stored, or
the individual images, for which the value pairs have been stored, are not permanently stored in the storage unit (34), and/or
the processed region comprises the entire captured image, and/or
the analysis region is a region of the individual image that exclusively represents the coating.

8. Method according to one of claims 1 to 7, including the further steps
moving the component relative to the image capture device (28) or vice versa using a drive device, controlled by the data processing unit (32), to capture, using the image capture device (28), the image sequence having the individual images of different regions of the surface of the component, and/or
automatic focusing of the image capture device (28), and/or
outputting of an error signal when one of the average values is above a particular predetermined upper limit value or below a particular predetermined lower limit value.

9. Method according to one of claims 1 to 8, including the further steps
calculating and storing a standard deviation of the first values and/or storing a maximum and of a minimum first value, and/or
calculating and storing a standard deviation of the second values and/or storing a maximum and of a minimum second value, and
optionally storing the average values and/or the standard deviations and/or the maximum and minimum values in metadata of the reference image or linking thereof with the reference image.

10. Method according to one of claims 1 to 9, wherein
the pore regions (50) have a darker gray value than the oxide regions (52), and the oxide regions (52) have a darker gray value than the other regions of the region of the surface,
for marking the pore regions (50) and the oxide regions (52) in the processing of each captured individual image, a pixel within a first gray-value range is marked as a pore region (50), and a pixel within a second gray-value range is marked as an oxide region (52), and
the gray-value ranges or their limits are optionally determined according to Otsu's method.

11. Method according to one of claims 1 to 10, wherein
the component is a polished specimen (18) of a cylinder bore of a cylinder block (10), which cylinder bore is provided with a coating, and, in the region that is captured using the image capture device (28), the surface of the polished specimen (18) is formed at least partially from the coating, and
optionally an automatic detecting of the region that is to be captured is effected.

12. Method according to one of claims 1 to 11, including the further steps
selecting, using an operator input unit (38), the analysis region in the individual image, for which analysis region the first value and the second value are calculated, or
automatic selecting the analysis region in the individual image, for which analysis region the first value and the second value are calculated, using a thresholding method executed in the data processing unit (32).

13. Image processing device for assessing the quality of a surface of a coating of a component, including
an electronic image capture device (28) configured to capture an image sequence having individual images of different regions of a surface of a component (18),
a data processing unit (32), which is configured to process a processed region of each captured individual image in real time such that pore regions (50) and oxide regions (52), represented in the processed region, of the coating are marked in the processed image in a manner that they are differentiable from each other, to calculate value pairs, each having a first value and a second value, for different processed individual images, wherein the first value specifies a first number of pixels, which represent pore regions (50) in an analysis region that corresponds to the processed region or that lies therein, of the individual image (42) currently being processed, or a ratio of the first number of pixels to a total number of pixels in the analysis region, and the second value specifies a second number of pixels that represent oxide regions (52) in the analysis region of the individual image (42) currently being processed, or a ratio of the second number of pixels to a total number of pixels in the analysis region, and to calculate a first average value of the first values and a second average value of the second values, and
a storage unit (34) configured to store the value pairs and the average values.

14. Image processing device according to claim 13, which further includes
a display device (36) configured to display each processed image in real time such that the pore regions and the oxide regions are marked in the displayed image in a manner that they are differentiable from each other, and
optionally, the first value and the second value are displayed with the display of each processed individual image (42) in real time on the display device (36), the first value and the second value being calculated based on the analysis region present in the respectively displayed individual image (42).

15. Image processing device according to claim 13 or 14, wherein
the display device (36) is configured to output an error signal when one of the average values is above a particular predetermined upper limit value or is below a particular predetermined lower limit value, and/or
an output unit (40) is provided that is configured to output an error signal when one of the average values is above a particular predetermined upper limit value or is below a particular predetermined lower value.

## Revendications

1. Procédé pour vérifier la qualité d'une surface d'un revêtement d'un composant, comprenant les étapes suivantes :
enregistrement d'une suite d'images avec des images individuelles de différentes zones d'une surface du composant au moyen d'un dispositif de prise d'images électronique (28),
traitement d'une zone de traitement de chaque image individuelle capturée en temps réel dans une unité de traitement de données (32), de sorte que des zones de pores (50) et des zones d'oxyde (52) du revêtement représentées dans la zone de traitement soient marquées de manière distincte les unes des autres dans l'image traitée,
stockage de paires de valeurs avec une première valeur et une seconde valeur pour diverses images individuelles traitées dans une unité de stockage (34), dans lequel la première valeur indique un premier nombre de pixels, qui représente des zones de pores (50), qui se trouve dans une zone d'évaluation qui correspond à la zone de traitement ou qui est située à l'intérieur de celle-ci, de l'image individuelle en cours de traitement (42) ou indique un rapport du premier nombre de pixels à un nombre total de pixels dans la zone d'évaluation, et la seconde valeur indique un second nombre de pixels qui représente des zones d'oxyde (52) dans la zone d'évaluation de l'image individuelle en cours de traitement (42) ou indique un rapport du second nombre de pixels à un nombre total de pixels dans la zone d'évaluation, et
calcul d'une première valeur moyenne des premières valeurs et d'une seconde valeur moyenne des secondes valeurs dans l'unité de traitement de données (32) et stockage des valeurs moyennes calculées dans l'unité de stockage (34).

2. Procédé selon la revendication 1, comprenant l'étape supplémentaire visant à
afficher chaque image traitée en temps réel sur un dispositif d'affichage (36) de sorte que les zones de pores (50) et les zones d'oxyde (52) marquées soient affichées de manière distincte les unes des autres dans l'image individuelle affichée (42).

3. Procédé selon la revendication 2, dans lequel
sont affichées avec l'affichage de chaque image individuelle traitée (42) en temps réel sur le dispositif d'affichage (36) la première valeur et la seconde valeur qui sont calculées sur la base de la zone d'évaluation présente dans l'image individuelle respectivement affichée (42).

4. Procédé selon l'une quelconque des revendications 1 à 3, comprenant les étapes supplémentaires visant à
sélectionner une zone d'évaluation dont la première valeur correspond à la première valeur moyenne ou s'en rapproche ou dont la seconde valeur correspond à la seconde valeur moyenne ou s'en rapproche, et
lier ou stocker conjointement la zone d'évaluation sélectionnée ou l'image individuelle correspondant à la zone d'évaluation en tant qu'image de référence avec les première et seconde valeurs moyennes.

5. Procédé selon la revendication 4, dans lequel
chaque image de référence est stockée avec au moins l'un d'un nom de la série de mesures, de la surface supérieure, de la date de l'enregistrement, de l'échelle.

6. Procédé selon l'une quelconque des revendications 1 à 5, comprenant les étapes supplémentaires visant à
stocker chaque image individuelle (42) pour laquelle une paire de valeurs est stockée et lier chaque image individuelle stockée à la paire de valeurs correspondante.

7. Procédé selon l'une quelconque des revendications 1 à 5, dans lequel
les images individuelles, pour lesquelles les paires de valeurs ont été stockées, ne sont pas stockées, ou
les images individuelles, pour lesquelles les paires de valeurs ont été stockées, ne sont pas stockées de manière permanente dans l'unité de stockage (34), et/ou
la zone de traitement comprend la totalité de l'image enregistrée et ou
la zone d'évaluation est une zone de l'image individuelle qui représente uniquement le revêtement.

8. Procédé selon l'une quelconque des revendications 1 à 7, comprenant les étapes supplémentaires visant à
déplacer le composant par rapport au dispositif de prise d'images (28) ou inversement au moyen d'un dispositif de d'entraînement commandé par l'unité de traitement de données (32) pour enregistrer la séquence d'images avec les images individuelles de différentes zones de la surface du composant au moyen du dispositif de prise d'images (28) et/ou
mettre au point automatiquement le dispositif de prise d'images (28) et/ou
délivrer en sortie un signal d'erreur si l'une des valeurs moyennes est supérieure à une valeur limite supérieure prédéterminée respective ou inférieure à une valeur limite inférieure prédéterminée respective.

9. Procédé selon l'une quelconque des revendications 1 à 8, comprenant les étapes supplémentaires visant à
calculer et stocker un écart-type des premières valeurs et/ou stocker une première valeur maximale et une première valeur minimale, et/ou
calculer et stocker un écart-type des secondes valeurs et/ou stocker une seconde valeur maximale et une seconde valeur minimale, et
stocker facultativement les valeurs moyennes et/ou les écarts-types et/ou les valeurs maximales et minimales dans les métadonnées de l'image de référence ou en les lier à l'image de référence.

10. Procédé selon l'une quelconque des revendications 1 à 9, dans lequel
les zones de pores (50) présentent une valeur de gris plus sombre que les zone d'oxyde (52) et les zones d'oxyde (52) présentent une valeur de gris plus sombre que les autres zones de la zone de la surface,
afin de marquer les zones de pores (50) et les zones d'oxyde (52) dans le traitement de chaque image individuelle enregistrée, un pixel ayant une première zone de valeur de gris est marqué en tant que zone de pores (50) et un pixel ayant une seconde zone de valeur de gris est marqué en tant que zone d'oxyde (52), et
les zones de valeur de gris ou leurs limites sont facultativement déterminées par la méthode d'Otsu.

11. Procédé selon l'une quelconque des revendications 1 à 10, dans lequel :
le composant est un échantillon poli (18) d'une surface de roulement de cylindre pourvue d'un revêtement d'un bloc-moteur (10) et la surface de l'échantillon poli (18), dans la zone qui est enregistrée par le dispositif de prise d'images (28), est formée au moins partiellement du revêtement et,
facultativement, une détection automatique de la zone à enregistrer a lieu.

12. Procédé selon l'une quelconque des revendications 1 à 11, avec les étapes supplémentaires visant à
sélectionner dans une image individuelle la zone individuelle pour laquelle la première valeur et la seconde valeur sont calculées au moyen d'une unité d'entrée utilisateur (38), ou
sélectionner automatiquement la zone d'évaluation dans l'image individuelle pour laquelle la première valeur et la seconde valeur sont calculées, au moyen d'un procédé d'évaluation de seuil exécuté dans l'unité de traitement de données (32).

13. Dispositif de traitement d'image pour vérifier la qualité d'une surface d'un revêtement d'un composant, comprenant
un dispositif de prise d'images électronique (28) conçu pour enregistrer une suite d'images avec des images individuelles de différentes zones d'une surface d'un composant (18),
une unité de traitement de données (32) qui est conçue pour traiter en temps réel une zone de traitement de chaque image individuelle enregistrée de telle sorte que des zones de pores (50) et des zones d'oxyde (52) du revêtement représentées dans la zone de traitement sont marquées de manière distincte les unes des autres dans l'image traitée, pour calculer des paires de valeurs ayant une première valeur et une seconde valeur pour différentes images individuelles traitées, dans lequel la première valeur indique un premier nombre de pixels, qui représente des zones de pores (50) dans une zone d'évaluation qui correspond à la zone de traitement ou qui est située à l'intérieur de celle-ci, de l'image individuelle en cours de traitement (42) ou indique un rapport du premier nombre de pixels à un nombre total de pixels dans la zone d'évaluation, et la seconde valeur indique un second nombre de pixels qui représente des zones d'oxydes (52) dans la zone d'évaluation des images individuelles en cours de traitement (42) ou indique un rapport du second nombre de pixels à un nombre total de pixels dans la zone d'évaluation, et calculer une première valeur moyenne des premières valeurs et une seconde valeur moyenne des secondes valeurs, et
une unité de stockage (34) qui est conçue pour stocker les paires de valeurs et les valeurs moyennes.

14. Dispositif de traitement d'image selon la revendication 13, présentant en outre
un dispositif d'affichage (36) qui est conçu pour afficher chaque image traitée en temps réel de telle sorte que les zones de pores et les zones d'oxyde dans l'image affichée soient marquées de manière distincte les unes des autres, et,
facultativement avec l'affichage de chaque image individuelle traitée (42) en temps réel, on affiche sur le dispositif d'affichage (36) la première valeur et la seconde valeur qui sont calculées sur la base de la zone d'évaluation présente dans chaque image individuelle respectivement affichée (42).

15. Dispositif de traitement d'image selon la revendication 13 ou 14, dans lequel
le dispositif d'affichage (36) est conçu pour délivrer en sortie un signal d'erreur lorsque l'une des valeurs moyennes est supérieure à une valeur limite supérieure prédéterminée respective ou inférieure à une valeur limite inférieure prédéterminée respective, et/ou
il est prévu une unité de sortie (40) qui est conçue pour délivrer en sortie un signal d'erreur lorsque l'une des valeurs moyennes est supérieure à une valeur limite supérieure prédéterminée respective ou inférieure à une valeur limite inférieure prédéterminée respective.
